# EUROPÄISCHE PATENTANMELDUNG

(11) **EP 1 970 234 A2**
(43) Veröffentlichungstag der Anmeldung: **17.09.2008**
(21) Anmeldenummer: 08003631.2
(22) Anmeldetag: 28.02.2008
(51) Int. Cl.: B60J 1/20

(54) **Sonnenschutzrollo für Kraftfahrzeuge**

(30) Priorität: 12.03.2007 DE 102007012259
(71) Anmelder: BOS GmbH & Co. KG, 73760 Ostfildern (DE)
(72) Erfinder: Hansen, Melf, 75053 Gondelsheim (DE)
(74) Vertreter: Patentanwälte Ruff, Wilhelm, Beier, Dauster & Partner

(57) **Zusammenfassung**

Die Erfindung betrifft ein Sonnenschutzrollo für eine Fensteröffnung eines Kraftfahrzeugs, insbesondere Seitenfensterrollo (2, 102, 202, 302), umfassend eine Wickelwelle (20), eine Rollobahn (21), welche mit einer ersten Kante an der Wickelwelle (20) befestigt ist, ein Auszugsprofil (22), welches mit einer der ersten Kante gegenüberliegenden zweiten Kante der Rollobahn (21) wirkverbunden ist, so dass mittels des Auszugsprofils (22) die Rollobahn (21) von der Wickelwelle (20) abziehbar ist, und eine Antriebsvorrichtung (3) mit einem Federmotor, wobei der Federmotor mindestens ein Federelement (34) aufweist, die Rollobahn (21) entgegen einer Rückstellkraft des Federelements (34) von der Wickelwelle (20) abziehbar ist und die Rollobahn (21) durch die Rückstellkraft des Federelements (34) auf die Wickelwelle (20) aufwickelbar ist, der Federmotor eine relativ zu der Wickelwelle (20) verdrehbar gelagerte Welle (33) aufweist, das Federelement (34) zwischen der Welle (33) und der Wickelwelle (20) angeordnet ist, und eine Drehbewegung der Welle (33) mit einer Verschiebung des Auszugsprofils (22) beim Abziehen und/oder Aufwickeln der Rollobahn (21) synchronisiert ist.

## Beschreibung

Die Erfindung betrifft ein Sonnenschutzrollo für eine Fensteröffnung eines Kraftfahrzeugs.

Das Sonnenschutzrollo ist beispielsweise als Seitenfensterrollo für ein Seitenfenster, als Heckfensterrollo für ein Heckfenster und/oder als Panoramafensterrollo für ein Panoramafenster in einem Fahrzeughimmel ausgebildet. Als Sonnenschutzrollo wird dabei jegliche Art von Rollo bezeichnet, durch welche ein Eintreten von Sonnenlicht verhindert und/oder die Fensteröffnung verdunkelt oder zumindest abgedeckt wird. Das Sonnenschutzrollo kann dabei auch als Sichtschutz dienen. Eine Rollobahn ist üblicherweise ein Gewirke. Es können jedoch auch Gewebe und/oder Kunststofffolien oder dergleichen als Rollobahn eingesetzt werden.

Aus der DE 101 58 428 A1 ist eine Sonnenschutzrolloanordnung für Kraftfahrzeuge bekannt, welche eine drehbar gelagerte Wickelwelle, eine auf die Wickelwelle aufwickelbare bzw. von dieser abwickelbare Rollobahn, eine am freien Ende der Rollobahn angreifende Zugseilanordnung oder dergleichen, welche gegensinnig zur Auf- bzw. Abwickelrichtung der Rollobahn von einer zu der Wickelwelle koaxialen Wickelspulenanordnung abgewickelt bzw. auf diese aufgewickelt wird, und Federmittel zum Spannen des aus Wickelwelle, Rollobahn, Zugseilanordnung und Wickelspulenanordnung bestehenden Verbundssystems umfasst. Weiter umfasst die Wickelspulenanordnung eine relativ zu der Wickelwelle verdrehbare Wickelspule, wobei zwischen der Wickelspulenanordnung und der Wickelwelle eine Drehfeder angeordnet ist, die durch eine relative Verdrehung von Wickelspulenanordnung und Wickelwelle gegeneinander im Sinne eines Spannens des Verbundssystems vorgespannt ist. Ein Aufwickeln und/oder Abwickeln der Rollobahn erfolgt durch eine Bewegung eines Zugspriegels, welcher ein freies Ende der Rollobahn mit den Zugseilen verbindet.

In anderen Rolloanordnungen ist ein sogenannter Federmotor zum Aufwickeln und Spannen der Rollobahn vorgesehen. Beispielsweise ist aus EP 1 123 824 A2 ein als Seitenfensterrollo ausgebildetes Sonnenschutzrollo für eine Seitenfensteröffnung eines Kraftfahrzeugs bekannt, das eine Wickelwelle, eine Rollobahn, welche mit einer ersten Kante an der Wickelwelle befestigt ist, ein Auszugsprofil, welches mit einer der ersten Kante gegenüberliegenden zweiten Kante der Rollobahn so wirkverbunden ist, dass mittels des Auszugsprofils die Rollobahn von der Wickelwelle abziehbar ist, und eine Antriebsvorrichtung mit einem Federmotor umfasst, wobei der Federmotor ein Federelement aufweist, die Rollobahn entgegen einer Rückstellkraft des Federelements von der Wickelwelle abziehbar ist und die Rollobahn durch die Rückstellkraft des Federelements aufwickelbar ist.

Eine notwendige Rückstellkraft und damit eine Größe eines einzusetzenden Federelements hängt unter anderem von einer maximalen Auszugslänge der Rollobahn ab. Je größer die notwendige Rückstellkraft, desto größer ist somit auch ein notwendiger Bauraum für das Sonnenschutzrollo. Zudem kann ein Ausziehen eines Sonnenschutzrollos gegen eine hohe Rückstellkraft einen Komfort eines manuellen Auszugs beeinträchtigen und/oder einen stärkeren Antriebsmotor für einen automatisierten Antrieb erfordern, was wiederum einen Vergrößerten Bauraumbedarf als Folge hat. Insbesondere im Bereich eines Seitenfensters steht jedoch üblicherweise nur ein geringer Bauraum zur Anbringung eines Seitenfensterrollos zur Verfügung.

Es ist daher Aufgabe der Erfindung, ein besonders kleinbauendes Sonnenschutzrollo, insbesondere zur Abdeckung einer Seitenfensteröffnung zu schaffen.

Diese Aufgabe wird durch ein Sonnenschutzrollo für eine Fensteröffnung eines Kraftfahrzeugs gelöst, das eine Wickelwelle, eine Rollobahn, welche mit einer ersten Kante an der Wickelwelle befestigt ist, ein Auszugsprofil, welches mit einer der ersten Kante gegenüberliegenden zweiten Kante der Rollobahn wirkverbunden ist, so dass mittels des Auszugsprofils die Rollobahn von der Wickelwelle abziehbar ist, und eine Antriebsvorrichtung mit einem ein Federelement aufweisenden Federmotor umfasst, wobei der Federmotor eine relativ zu der Wickelwelle verdrehbar gelagerte Welle umfasst, das Federelement zwischen der Welle des Federmotors und der Wickelwelle angeordnet ist und eine Drehbewegung der Welle mit einer Verschiebung des Auszugsprofils beim Abziehen und/oder Aufwickeln der Rollobahn synchronisiert ist.

Durch ein synchronisiertes Mitdrehen der Welle ist es möglich, ein Federelement mit einer geringeren Rückstellkraft vorzusehen, als bei einem gleich dimensionierten Rollo mit unbewegter Welle. Wird das Auszugsprofil mit einer konstanten Geschwindigkeit zum Abrollen der Rollobahn bewegt, so dreht auch die Welle des Federmotors mit einer konstanten Geschwindigkeit. Die Drehgeschwindigkeit der Wickelwelle steigt dagegen aufgrund des abnehmenden Wickeldurchmessers der Rollobahn an der Wickelwelle beim Abwickeln der Rollobahn. Durch das Federelement bleibt eine ausreichende Spannung in der Rollobahn vorhanden, wobei jedoch aufgrund der Verdrehung der Welle des Federmotors verhindert wird, dass Gegenkräfte zum Abwickeln zu groß werden. Bei Aufwickeln der Rollobahn auf die Wickelwelle kann aufgrund der mit steigendem Wickeldurchmesser der Rollobahn an der Wickelwelle sinkenden Drehgeschwindigkeit der Wickelwelle die Welle des Federmotors der Wickelwelle vorauseilen. Dadurch wird das Federelement so gespannt, dass eine notwendige Kraft zum Aufwickeln der Rollobahn aufgebracht wird.

In einer Ausgestaltung der Erfindung umfasst die Antriebsvorrichtung einen Elektromotor, insbesondere einen Getriebemotor. Durch einen derartigen Motor ist ein ferngesteuerter Antrieb, beispielsweise durch einen Fahrer und/oder einen Nutzer auf einfache Weise möglich. In anderen Ausgestaltungen kann ein Verschieben des Auszugsprofils manuell, pneumatisch und/oder hydraulisch erfolgen, wobei geeignete Kopplungsmittel vorgesehen sind, um eine Bewegung des Auszugsprofils mit der Drehbewegung der Welle des Federmotors zu synchronisieren.

In einer Weiterbildung der Erfindung erfolgt eine Synchronisation mittels Seil- und/oder Riemenantrieb. Ein Riemenantrieb kann beispielsweise als Zahnriemenantrieb gestaltet sein, wobei der Riemenantrieb mittels eines Zahnrads angetrieben wird.

In einer Weiterbildung der Erfindung umfasst der Seil- und/oder Riemenantrieb ein Endlosseil bzw. einen Endlosriemen. Das Auszugsprofil ist in einer Ausgestaltung an einer geeigneten Position an dem Endlosseil bzw. dem Endlosriemen angebracht. Der Riemen und/oder das Seil treibt weiter die Welle des Federmotors über eine Reibkraft und/oder über einen Formschluss, beispielsweise über einen Zahnriemen.

In einer Ausgestaltung der Erfindung ist eine Antriebswelle des Elektromotors parallel zu der Welle des Federmotors angeordnet, wobei der Abstand zwischen der Antriebswelle und der Welle des Federmotors größer oder gleich einer maximalen Auszugslänge ist. Bei einem Endlosriemen oder einem Endlosseil dient die Welle des Federmotors dabei auch als Umkehrrolle für den Seil- oder Riemenantrieb. Die Welle kann einen für die Bewegung geeigneten Durchmesser aufweisen und/oder für einen Bewegungseintrag mit einem Flansch oder dergleichen gestaltet sein.

In einer weiteren Ausgestaltung umfasst die Antriebsvorrichtung mindestens eine Umlenkrolle. Dadurch ist es möglich, den Antriebsmotor an einer geeigneten Position in dem Kraftfahrzeug anzuordnen.

In einer weiteren Ausgestaltung umfasst die Antriebsvorrichtung ein drucksteifes, flexibles, längliches Element und/oder eine Zahnstange, wobei das Auszugsprofil und die Welle mittels des drucksteifen, flexiblen Elements und/oder der Zahnstange antreibbar sind. Das drucksteife, flexible Element ist beispielsweise ein flexibler Kunststoff- und/oder Metalldraht, eine Seele eines Bowdenzugs, eine verseilte Drahtlitze oder eine Zahnschnur. Das flexible Element ist innerhalb der Fahrzeugtür platzsparend verstaubar, beispielsweise auf einer Welle aufrollbar. Als Zahnschnur wird im Sinne der Erfindung ein flexibles Kraftübertragungsmittel bezeichnet, das im Verhältnis zu seiner Dicke sehr langgestreckt ist und durch das sowohl Zug- als auch Druckkräfte übertragbar sind. Eine Zahnschnur umfasst beispielsweise eine biegeelastische Seele, welche üblicherweise zylindrisch gestaltet ist, und einen Wendel, welcher um die Seele gewunden ist, um so eine Schrägverzahnung zu bilden. Die Zahnschnur weist eine ausreichende Steifigkeit auf, um das Auszugsprofil des Sonnenschutzrollos zu verschieben, insbesondere wenn die Zahnschnur in einer Führung geführt ist.

In einer weiteren Ausgestaltung der Erfindung ist die Antriebswelle koaxial zu der Welle des Federmotors angeordnet. Die Welle ist dabei direkt über den Antriebsmotor antreibbar. Eine Bewegungsübertragung auf das Auszugsprofil erfolgt beispielsweise mittels eines Seil- und/oder Riemenantriebs und/oder mittels einer Zahnstange oder dergleichen.

In einer weiteren Ausgestaltung der Erfindung ist das Sonnenschutzrollo als Seitenfensterrollo ausgebildet, wobei die Wickelwelle parallel zu einem seitlichen Rand einer Fensteröffnung angeordnet ist. Insbesondere bei einer horizontal angeordneten Wickelwelle steht üblicherweise nur wenig Bauraum in Axialrichtung der Wickelwelle zur Verfügung. Durch die erfindungsgemäße drehbare Lagerung des Federmotors kann auf eine große Rückstellfeder verzichtet werden, so dass ein Platzbedarf deutlich reduziert ist.

In einer weiteren Ausgestaltung der Erfindung entspricht der Zuschnitt der Rollobahn zumindest annähernd einer Form einer Fensteröffnung eines Seitenfensters. Dadurch ist es möglich, eine gute Abdunklung und/oder einen guten Sonnenschutz zu erzielen.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich Verfahrensschritte, konstruktive Einzelheiten und räumliche Anordnungen, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine hintere, rechte Seitentür eines Kraftfahrzeugs mit einem erfindungsgemäßen Seitenfensterrollo in einer teilweise freigeschnittenen Darstellung;
- Fig. 2:: ein Seitenfensterrollo gemäß Fig. 1 in einer teilweise freigeschnittenen Darstellung;
- Fig. 3:: ein zweites Ausführungsbeispiel eines erfindungsgemäßen Seitenfensterrollos in einer teilweise freigeschnittenen Darstellung und
- Fig. 4:: ein drittes Ausführungsbeispiel eines erfindungsgemäßen Seitenfensterrollos in einer teilweise freigeschnittenen Darstellung.

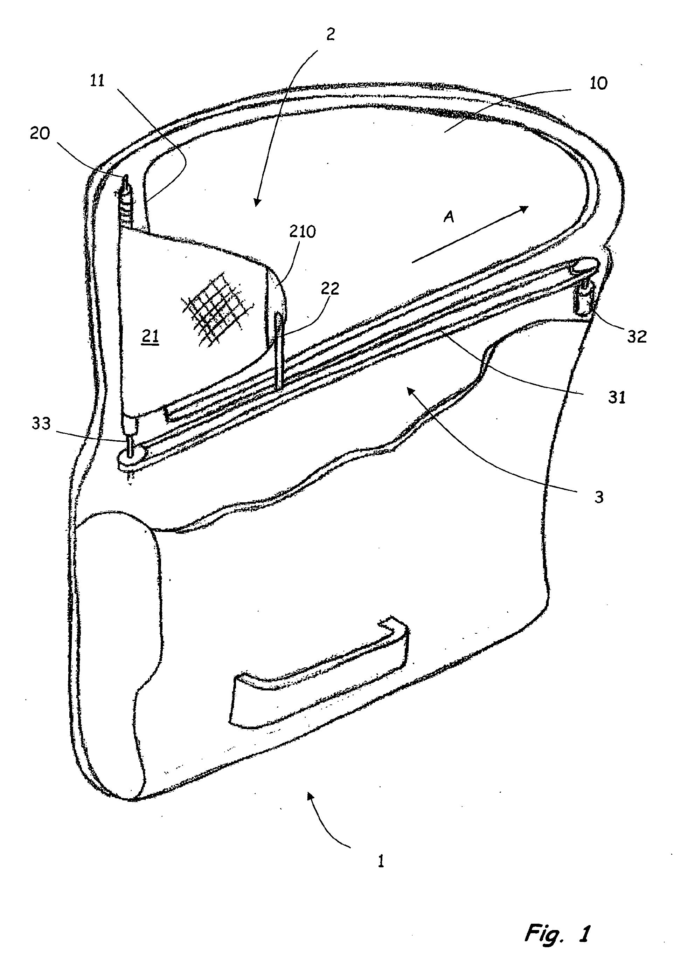

Figur 1 zeigt schematisch eine hintere rechte Seitentür 1 eines Kraftfahrzeugs, an welcher ein erfindungsgemäßes Sonnenschutzrollo, welches als Seitenfensterrollo 2 ausgebildet ist, angeordnet ist. Die Seitentür 1 weist eine Fensteröffnung 10 auf, welche durch das Seitenfensterrollo 2 abdeckbar ist. Die Fensteröffnung 10 weist einen vorderen Rand 11 auf, wobei eine Wickelwelle 20 des dargestellten Seitenfensterrollos 2 parallel zu dem Rand 11 der Seitenfensteröffnung 10 angeordnet ist.

Das Seitenfensterrollo 2 umfasst eine Rollobahn 21, welche mit einer nicht sichtbaren, ersten Kante an der Wickelwelle 20 befestigt ist. Die Rollobahn 21 ist beispielsweise ein Gewebe, Gewirke, eine Kunststofffolie oder dergleichen, welche für sichtbares Licht und/oder UV-Licht undurchlässig gestaltet ist.
Das Seitenfensterrollo 2 umfasst weiter ein Auszugsprofil 22, welches mit einer der ersten Kante gegenüberliegenden, zweiten Kante 210 der Rollobahn 21 wirkverbunden ist, sodass die Rollobahn 21 mittels des Auszugsprofils 22 von der Wickelwelle 20 abziehbar ist. Eine Antriebsvorrichtung 3 des Seitenfensterrollos 2 weist einen Federmotor mit einem in der Wickelwelle 20 angeordneten, in Figur 1 nicht sichtbaren Federelement auf. Die Rollobahn 21 ist entgegen einer Rückstellkraft des nicht dargestellten Federelements von der Wickelwelle 20 durch Verschieben des Auszugsprofils 22 in eine Auszugsrichtung A abwickelbar. Ein Aufwickeln der Rollobahn 21 auf die Wickelwelle 20 erfolgt mittels einer Rückstellkraft des Federelements.

Ein Verschieben des Auszugsprofils 22 erfolgt in dem in Figur 1 dargestellten, ersten Ausführungsbeispiel mittels eines Riemenantriebs umfassend einen Endlosriemen 31. Der Endlosriemen 31 wird über einen elektrischen Getriebemotor 32 angetrieben. An dem Riemen 31 ist das Auszugsprofil 22 angebracht, beispielsweise mit diesem verklebt und/oder vernietet.

Erfindungsgemäß weist der Federmotor 30 eine relativ zu der Wickelwelle 20 verdrehbar gelagerte Welle 33 auf, wobei die Welle 33 ebenfalls durch den Endlosriemen 31 angetrieben wird, sodass eine Drehbewegung der Welle 33 mit einer translatorischen Bewegung des Auszugsprofils 22 synchronisiert ist.

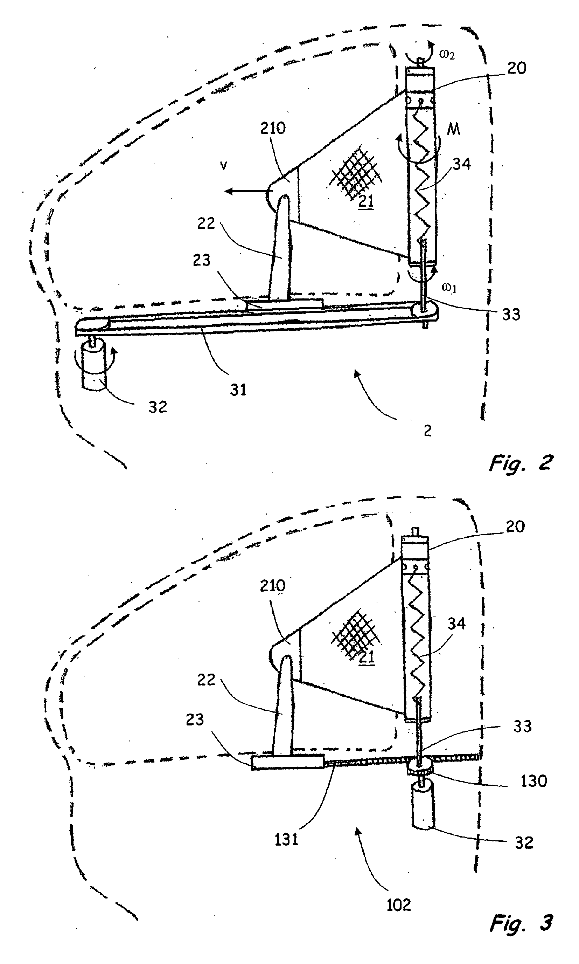

Figur 2 zeigt schematisch das Seitenfensterrollo 2 gemäß Figur 1 in einer teilweise freigeschnittenen Darstellung, wobei zu einem besseren Verständnis eine Kontur der Seitentür 1 gemäß Figur 1 gestrichelt dargestellt ist. In Figur 2 ist die Wickelwelle 20 freigeschnitten dargestellt, sodass ein Federelement 34 des Federmotors sichtbar ist. Wie in Figur 2 erkennbar, ist das Federelement 34 zwischen der Wickelwelle 20 und der Welle 33 des Federmotors 30 angeordnet, wobei beispielsweise die Enden des Federelements 34 mit der Welle 33 bzw. der Wickelwelle 20 für eine Bewegungsübertragung verbunden sind. Zum Abziehen der Rollobahn 21 von der Wickelwelle 20 wird der Riemen 31 in der in Figur 2 dargestellten Ausführungsform entgegen dem Uhrzeigersinn angetrieben. Die Bewegung des Riemens 31 wird auf die Welle 33 übertragen, sodass die Welle 33 mit einer Drehgeschwindigkeit ω₁ dreht. Aufgrund einer Verschiebung des Auszugsprofils 22 mit einer Geschwindigkeit v wird die Wickelwelle 20 zum Abrollen der Rollobahn 21 mit einer Drehgeschwindigkeit ω₂ angetrieben. Mit Abziehen der Rollobahn 21 verringert sich ein Wickeldurchmesser der Rollobahn 21 an der Wickelwelle 20. Mit sinkendem Wickeldurchmesser an der Wickelwelle 20 steigt die Drehgeschwindigkeit der Wickelwelle 20 beim Abziehen. Übersteigt die Drehgeschwindigkeit ω₂ der Wickelwelle 20 eine Drehgeschwindigkeit ω₁ der Welle 33, so wird das Federelement 34 gespannt. Aufgrund der Verspannung des Federelements 34 wirkt ein schematisch durch einen Pfeil angedeutetes Rückstellmoment M, durch welches die Rollobahn 21 in einem gespannten Zustand gehalten wird. Durch eine Umkehr der Drehrichtung des Antriebsmotors 32 wird die Rollobahn 21 auf die Wickelwelle 20 aufgerollt. Dabei kann die Bewegung der Welle 33 der Bewegung der Wickelwelle 20 vorauseilen. Eine daraus resultierende Spannung des Federelements 34 bewirkt ebenfalls ein Moment M zum Spannen der Rollobahn 21. Das dargestellte Auszugsprofil 22 weist eine Galgenform auf, wobei das Auszugsprofil 22 über einen Schlitten 23 an dem Riemen 31 befestigt ist. Der Schlitten 23 kann dabei in einer nicht dargestellten Führung verschieblich gelagert sein.

Figur 3 zeigt ein zweites Ausführungsbeispiel eines erfindungsgemäßen Sonnenschutzrollos 102. Das Sonnenschutzrollo 102 entspricht im Wesentlichen dem Sonnenschutzrollo 2 gemäß Figur 2 und für gleiche Bauteile werden einheitliche Bezugszeichen verwendet. Auf eine detaillierte Beschreibung dieser Bauteile wird verzichtet. Bei dem Sonnenschutzrollo 102 ist ein Antriebsmotor 32 koaxial zu der Welle 33 des Federmotors 30 angeordnet. Eine Antriebswelle des Antriebsmotors 32 kann dabei einteilig mit der Welle 33 gestaltet sein. An der Welle 33 ist ein Zahnrad 130 angeordnet, durch welches eine Zahnstange 131 antreibbar ist. Die Zahnstange 131 ist mit dem Auszugsprofil 22 wirkverbunden, sodass das Auszugsprofil 22 mittels der Zahnstange 131 verschiebbar ist. Die Zahnstange 131 und/oder der Schlitten 23 können dabei in einer nicht dargestellten Führung verschieblich gelagert und somit geführt sein.

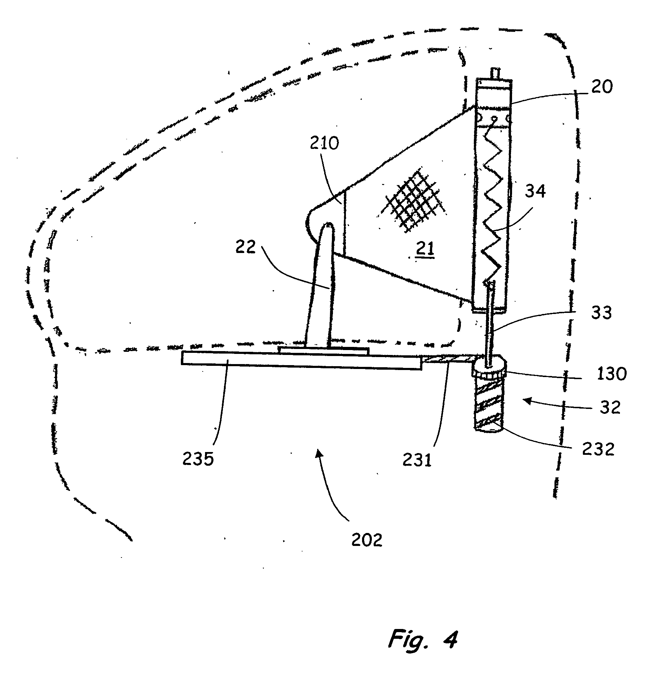

Figur 4 zeigt ein Seitenfensterrollo 202 gemäß einem dritten Ausführungsbeispiel der Erfindung. Das Seitenfensterrollo 202 entspricht im Wesentlichen dem Seitenfensterrollo 102 gemäß Figur 3 und für gleiche Bauteile werden einheitliche Bezugszeichen verwendet. Auf eine Beschreibung dieser Bauteile wird verzichtet. In dem Ausführungsbeispiel gemäß Figur 4 erfolgt ein Antrieb der Welle 33 und des Auszugsprofils 22 mittels einer Zahnschnur 231. Die Zahnschnur 231 ist in dem dargestellten Ausführungsbeispiel auf einer koaxial zu dem Antriebsmotor 32 angeordneten Welle 232 aufwickelbar. Die Zahnschnur 231 und der Schlitten 23 sind in einer Führung 235 verschieblich gelagert, um so ein Ausknicken der Zahnschnur 231 zu verhindern.

Für die dargestellten Seitenfensterrollos mit horizontal angeordneten Wickelwellen ist eine erfindungsgemäße kleinbauende Gestaltung besonders vorteilhaft. Ein erfindungsgemäßes Sonnenschutzrollo kann jedoch auch an einem Panoramafenster und/oder einem Heckfenster eines Kraftfahrzeugs angeordnet sein.

## Patentansprüche

1. Sonnenschutzrollo für eine Fensteröffnung eines Kraftfahrzeugs, insbesondere Seitenfensterrollo (2, 102, 202, 302), umfassend eine Wickelwelle (20), eine Rollobahn (21), welche mit einer ersten Kante an der Wickelwelle (20) befestigt ist, ein Auszugsprofil (22), welches mit einer der ersten Kante gegenüberliegenden zweiten Kante der Rollobahn (21) wirkverbunden ist, so dass mittels des Auszugsprofils (22) die Rollobahn (21) von der Wickelwelle (20) abziehbar ist, und eine Antriebsvorrichtung (3) mit einem Federmotor, wobei der Federmotor mindestens ein Federelement (34) aufweist, die Rollobahn (21) entgegen einer Rückstellkraft des Federelements (34) von der Wickelwelle (20) abziehbar ist und die Rollobahn (21) durch die Rückstellkraft des Federelements (34) auf die Wickelwelle (20) aufwickelbar ist, **dadurch gekennzeichnet, dass**
der Federmotor eine relativ zu der Wickelwelle (20) verdrehbar gelagerte Welle (33) aufweist, wobei das Federelement (34) zwischen der Welle (33) und der Wickelwelle (20) angeordnet ist, und eine Drehbewegung der Welle (33) mit einer Verschiebung des Auszugsprofils (22) beim Abziehen und/oder Aufwickeln der Rollobahn (21) synchronisiert ist.

2. Sonnenschutzrollo nach Anspruch 1, **dadurch gekennzeichnet, dass** die Antriebsvorrichtung einen Antriebsmotor (32), vorzugsweise einen Elektromotor, insbesondere einen Getriebemotor, umfasst.

3. Sonnenschutzrollo nach Anspruch 1 oder 2, **dadurch gekennzeichnet, dass** das eine Synchronisation mittels Seil- und/oder Riemenantrieb erfolgt.

4. Sonnenschutzrollo nach Anspruch 3, **dadurch gekennzeichnet, dass** der Seil- und/oder Riemenantrieb ein Endlosseil bzw. einen Endlosriemen (31) umfasst.

5. Sonnenschutzrollo nach Anspruch 3 oder 4, **dadurch gekennzeichnet, dass** eine Antriebswelle des Antriebsmotors (32) parallel zu der Welle (33) des Federmotors angeordnet ist, wobei der Abstand zwischen der Antriebswelle und der Welle (33) des Federmotors größer oder gleich einer maximalen Auszugslänge ist.

6. Sonneschutzrollo nach Anspruch 3, 4 oder 5, **dadurch gekennzeichnet, dass** die Antriebsvorrichtung mindestens eine Umlenkrolle umfasst.

7. Sonnenschutzrollo nach Anspruch 1, **dadurch gekennzeichnet, dass** die Antriebsvorrichtung ein drucksteifes, flexibles Element (231) und/oder eine Zahnstange (131) umfasst, wobei das Auszugsprofil (22) und die Welle (33) mittels dem drucksteifen, flexiblen Element (231) und/oder der Zahnstange (131) antreibbar sind.

8. Sonnenschutzrollo nach Anspruch 6 oder 7, **dadurch gekennzeichnet, dass** die Antriebswelle des Antriebsmotors (32) koaxial zu der Welle (339 des Federmotors angeordnet ist.

9. Sonnenschutzrollo nach einem der Ansprüche 1 bis 8, **dadurch gekennzeichnet, dass** das Sonnenschutzrollo als Seitenfensterrollo (2, 102, 202) ausgebildet ist, wobei die Wickelwelle (20) parallel zu einem seitlichen Rand (11) einer Fensteröffnung (10) angeordnet ist.

10. Sonnenschutzrollo nach einem der Ansprüche 1 bis 9, **dadurch gekennzeichnet, dass** ein Zuschnitt der Rollobahn (21) zumindest annähernd einer Form einer Fensteröffnung (10) eines Seitenfensters entspricht.
